Europäisches Patentamt

European Patent Office

Office européen des brevets

(11) Publication number: **0 461 937 A2**

# EUROPEAN PATENT APPLICATION

(21) Application number: **91305449.0**

(51) Int. Cl.⁵: **H04N 7/22**

(22) Date of filing: **17.06.91**

(30) Priority: **15.06.90 JP 158378/90**

(43) Date of publication of application:
**18.12.91 Bulletin 91/51**

(84) Designated Contracting States:
**DE FR GB NL**

(71) Applicant: **NEC CORPORATION**
**7-1, Shiba 5-chome Minato-ku**
**Tokyo 108-01 (JP)**

(72) Inventor: **Suzuki, Syuji, c/o NEC Corporation**
**7-1, Shiba 5-chome, Minato-ku, Minato-ku**
**Tokyo (JP)**

(74) Representative: **Orchard, Oliver John**
**JOHN ORCHARD & CO. Staple Inn Buildings**
**North High Holborn**
**London WC1V 7PZ (GB)**

(54) CATV signal distribution system using optical fibres.

(57)    A CATV signal distribution system including a transmitter for multiplexing a plurality of TV signals to output a multiplexed TV signal in the form of an optical signal, a plurality of receivers, each owned by a subscriber and selecting any one of the plurality of TV signals to output a selected TV signal, and an optical transmission path interconnecting the transmitter and the plurality of receivers, the transmitter having an amplitude modulator for amplitude modulating subcarriers, each with a particular frequency and being assigned one-to-one to the plurality of TV signals by a respective one of the plurality of TV signals to produce a plurality of amplitude modulated (AM) signals, a multiplexer for multiplexing the plurality of AM signals to output a frequency multiplexed (FDM) signal, frequency modulating means for frequency modulating a main carrier having a predetermined frequency by the FDM signal to produce a frequency modulated (FM) signal, and an optical-to-electrical signal converter for converting the FM signal to a corresponding optical signal and outputting the optical signal, the plurality of receivers each having optical-to-electrical signal converting means for receiving the optical signal and converting the optical signal to the FM signal, an FM demodulator for demodulating the FM signal to output the FDM signal, selecting means for receiving the FDM signal and selecting any one of said plurality of AM signals constituting the FDM signal and outputting the selected one of the AM signals as a selected AM signal, and an AM demodulator for demodulating the selected AM signal to output the selected AM signal as the selected TV signal.

EP 0 461 937 A2

*Fig. 3.*

## BACKGROUND OF THE INVENTION:

The present invention relates to a system for distributing a CATV signal and, more particular, to a CATV signal distribution system using an optical signal.

Trials for a subscriber system of the type laying optical fibers as far as the subscriber's homes for implementing broadband communication services have recently been initiated. It is desirable with this type of subscriber system to deliver an optical CATV distribution service which distributes a plurality of channels of TV signals over optical fibers, in addition to communication services. An optical CATV distribution system has been proposed by, for example, Stuart S. Wagner et al in a paper entitled "Evolutionary Architectures and Techniques for Video Distribution on Fiber", IEEE Communications Magazine, December 1989, pp. 17-25. Wagner et al describes two different types of systems in the paper, as follows. In one system, a transmitter has voltage controlled oscillators (VCOs) each having a particular center frequency and using one of a plurality of channels of TV signals as a control voltage. The outputs of the VCOs are multiplexed and then converted to an optical signal. On the other hand, receivers each has a bandpass filter and a variable frequency converter which converts the center frequency of desired one of the TV signals to the pass band of the filter. In the other system reported by Wagner et al, amplitude modulators each subjects respective one of a plurality of channels of TV signals to vestigial sideband amplitude modulation (VSB-AM) by use of a particular frequency. The resulted VSB-AM signals are multiplexed and then transmitted as an optical signal. A receiver, as in the first-mentioned system, converts the center frequency of the desired TV signal to the pass band of a band-pass filter by using a variable frequency converter. These two different systems will be described in detail later.

However, the problem with the first-mentioned system which relies on frequency modulation is that the variable frequency converter and band-pass filter of the receiver cannot be implemented by the component parts of an ordinary CATV tuner, increasing the cost of the receiver. By contrast, since the second-mentioned system uses VSB-AM which is the same modulation system as the ordinary CATV using coaxial cables, it can share the component parts of an inexpensive CATV tuner for coaxial cable transmission extensively used today. Nevertheless, VSB-AM is lower in signal-to-noise (S/N) ratio than frequency modulation and, therefore, not only limits the transmission range available but also prevents a single signal from being distributed to multiple subscribers.

## SUMMARY OF THE INVENTION

It is therefore an object of the present invention to provide an optical CATV signal distribution system free from the drawbacks particular to conventional system as discussed above.

In accordance with the present invention, in CATV signal distribution system comprising a transmitter for multiplexing a plurality of TV signals to output a multiplexed TV signal in the form of an optical signal, a plurality of receivers each being owned by a particular subscriber and selecting any one of the plurality of TV signals to output a selected TV signal, and an optical transmission path interconnecting the transmitter and receivers, the transmitter comprises amplitude modulating means for amplitude modulating subcarriers each having a particular frequency and assigned one-to-one to the plurality of TV signals by respective one of the plurality of TV signals to thereby produce a plurality of amplitude modulated (AM) signals, multiplexing means for multiplexing the plurality of AM signals to output a frequency multiplexed (FDM) signal, frequency modulating means for frequency modulating a main carrier having a predetermined frequency by the FDM signal to produce a frequency modulated (FM) signal, and optical-to-electrical signal converting means for converting the FM signal to a corresponding optical signal and outputting the optical signal. The receivers each comprises optical-to-electrical signal converting means for receiving the optical signal and converting the optical signal to the FM signal, FM detecting means for demodulating the FM signal to output the FDM signal, selecting means for receiving the FDM signal, selecting any one of the plurality of AM signals constituting the FDM signal, and outputting the selected AM signal as a selected AM signal, and AM detecting means for demodulating the selected AM signal to output the selected AM signal as the selected TV signal.

## BRIEF DESCRIPTION OF THE DRAWINGS

The above and other objects, features and advantages of the present invention will become more apparent from the following detailed description when taken with the accompanying drawings in which:

Figs. 1 and 2 are block diagrams each schematically showing a conventional optical CATV signal distribution system;

Fig. 3 is a schematic block diagram showing an optical CATV signal distribution system in accordance with the present invention;

Fig. 4 is a schematic block diagram showing an alternative embodiment of the present invention;

Fig. 5 is a block diagram schematically showing another alternative embodiment of the present invention; and

Fig. 6 is a diagram showing a specific construction of a pulse width regulating circuit included in the embodiment of Fig. 5.

## DETAILED DESCRIPTION OF THE PREFERRED EMBODIMENTS

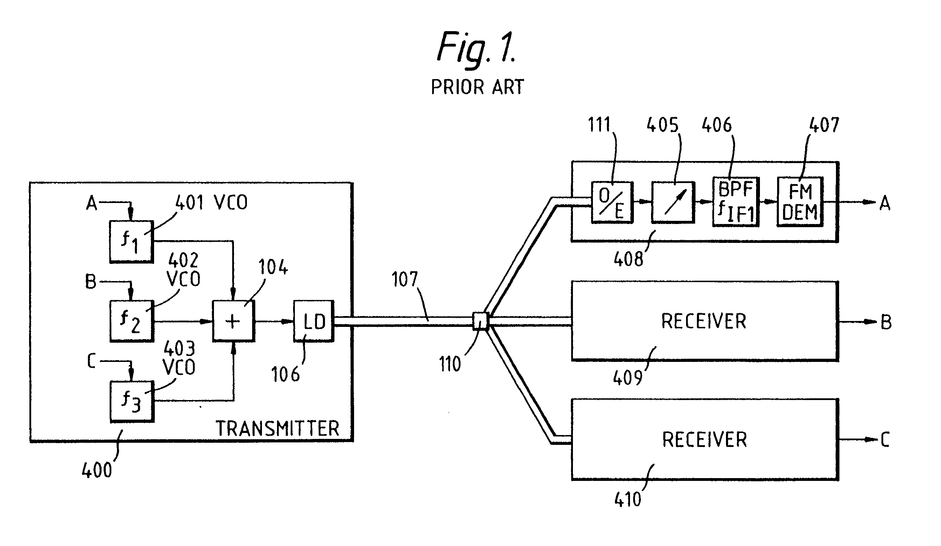

To better understand the present invention, a brief reference will be made to a conventional CATV signal distribution system which is the previously mentioned first system proposed by Wagner et al, shown in Fig. 1. As shown, the distribution system has a transmitter 400, a plurality of receivers 408-410 each being owned by a particular subscriber, an optical fiber 107, and an optical splitter 110. Let the system of Fig. 1 be assumed to distribute three channels of TV signals to the three subscribers 408-410 for simplicity. The transmitter 400 has a first to a third voltage controlled oscillator (VCO) 401-403 equal in number to the channels and having a first to a third center frequency $f_1$ - $f_3$, respectively. Three channels of TV signals each is applied to the control voltage terminal of respective one of the VCOs 401-403. As a result, the VCOs 401-403 generate respectively a first to a third modulated signal having been modulated by the TV signals A-C. The first to third modulated signals are frequency multiplexed by an adder 104 and then fed to a semiconductor laser 106. The laser 106 transforms the frequency multiplexed signal to an optical signal and sends it out over the optical fiber 107. The splitter 110 distributes the input optical signal to the receivers 408-410. Since the first to third receivers 408-410 have an identical construction, let the following description concentrate on the first receiver 408 by way of example. The receiver 408 has an optical-to-electrical (O/E) converter 111, a variable frequency converter 405, a band-pass filter 406, and an FM (Frequency Modulation) detector 407. The O/E converter 111 converts the optical signal coming in via the splitter 110 to a frequency multiplexed signal having the center frequencies $f_1$ - $f_3$. The variable frequency converter 405 converts the frequency multiplexed signal to another frequency by a heterodyne system or similar conversion system and then outputs the resulted signal as a converted FDM signal. The band-pass filter 406 passes, among the frequency components constituting the converted FDM signal, only the frequency component lying in the vicinity of a particular frequency $f_{IF1}$. More specifically, the variable frequency converter 405 converts, among the center frequencies $f_1$ - $f_3$ of the multiplexed signal, the center frequency associated with a desired TV signal to the pass band $f_{IF1}$ of the band-pass filter 406. This allows the subscriber to select desired one of the plurality of channels of TV signals. Fig. 1 shows a specific condition wherein the variable frequency converters 405 built in the first to third receivers 408-410 have selected respectively the first to third CATV signals A-C by converting the center frequencies $f_1$ - $f_3$ of the multip-

lexed signal to the pass band $f_{IF1}$ of the associated band-pass filters 406. In this type of conventional system, the VCOs 401-403 for the FM modulation oscillates at a high frequency on the order of several gigahertz. This brings about a problem that the variable frequency converter 405 and band-pass filter 406 incorporated in each of the receivers 408-410 are extremely expensive.

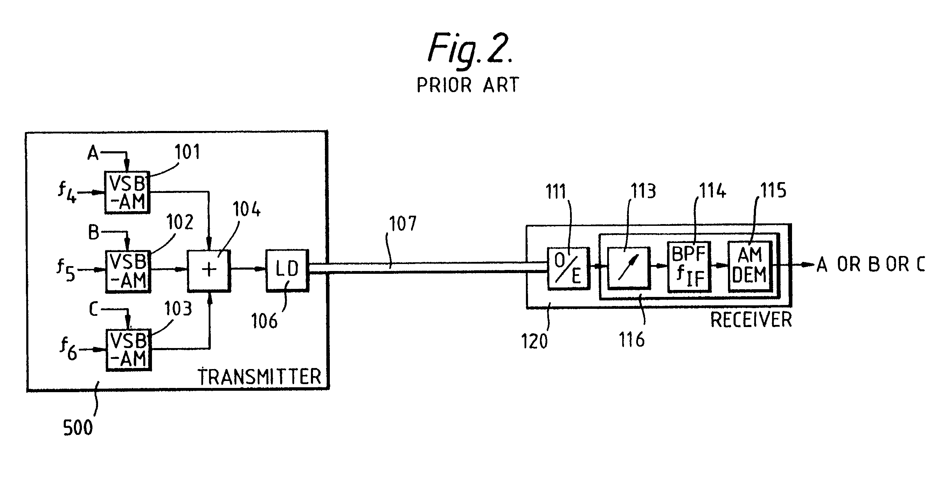

Fig. 2 shows the second optical CATV signal distribution system also proposed by Wagner. As shown, the distribution system has a transmitter 500, an optical filter 107, and a receiver 117. Again, assume that the distribution system distributes three different kinds of CATV signals. The transmitter 500 has a first to a third vestigial sideband modulators (VSB-AM) 101-103, an adder 104, and a semiconductor laser 106. The first to third VSB-AM modulators 101-103 modulate respectively carriers of frequencies $f_4$ - $f_6$ by a first to a third CATV signal A-C to thereby produce VSB-AM modulated signals. The carrier frequencies $f_4$ - $f_6$ may be 20 megahertz, 26 megahertz and 32 megahertz which CATV now in practical use and implemented with coaxial cables use. The adder 104 multiplexes the modulated signals from the VSB-AM modulators 101-103 to output a modulated VSB-AM signal. This frequency multiplexed signal is applied to a semiconductor laser 106 and converted into an optical signal thereby. The optical signal is sent over the optical fiber 107 to the receiver 117 owned by a particular subscriber.

The receiver 117 has an optical-to-electrical (O/E) converter 111, a variable frequency converter 113, a band-pass filter 114, and an AM detector 115. The O/E converter 111 converts the incoming optical signal to an electrical signal to produce a frequency multiplexed signal having center frequencies $f_4$ - $f_6$. The variable frequency converter 113 converts the multiplexed signal to another frequency by a heterodyne system and applies the resulted signal to the band-pass filter 114. The band-pass filter 114 passes only a frequency component lying in the vicinity of a frequency $f_{IF}$. Specifically, when the variable frequency converter 113 converts the frequency of the frequency component whose center frequency is $f_4$ to the frequency $f_{IF}$, only the information carried by the video signal A passes the band-pass filter 114. Likewise, when the variable frequency converter 113 converts the frequency component whose frequency component $f_5$ or $f_6$ to the frequency $f_{IF}$, information carried by the video signal B or C passes the band-pass filter 114. The AM demodulator 115 demodulates the output of the band-pass filter 114, i.e., modulated VSB-AM signal to thereby output a video signal. In this manner, the receiver 117 selects desired one of the video signals A, B and C by controlling the variable frequency converter.

The second distribution system described above uses a VSB-AM signal and, therefore, can share the

same frequencies $f_4$ - $f_6$ as an ordinary coaxial CATV system which also uses a VSB-AM signal. It follows that the variable frequency converter 113, band-pass filter 114 and AM modulator 115 can be implemented by the component parts of an inexpensive CATV tuner 116 without any modification, reducing the cost of the receive 117. However, such a VSB-AM type system cannot achieve the same level of signal-to-noise (S/N) ratio as the first system shown in Fig. I unless a more intense optical signal is inputted to the O/E converter 111. Consequently, it is impossible to distribute the output optical signal of the transmitter 500 to a plurality of receivers.

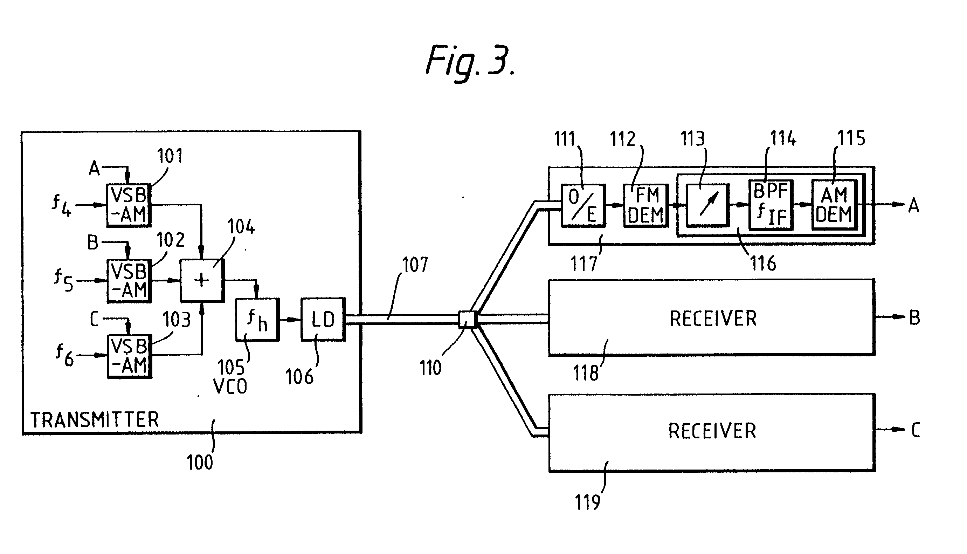

Referring to Fig. 3, a CATV signal distribution system embodying the present invention is shown. In Fig. 3, the same or similar components as those shown in Fig. 2 are designated by the same reference numerals. The illustrative embodiment is also assumed to transmit three different kinds of TV signals to each of three subscribers by way of example. Specifically, the distribution system has a transmitter 100, a first to a third receiver 117-119, an optical fiber 107, and an optical splitter 110. The transmitter 100 is identical in construction with the transmitter 500, Fig. 2, except for a VCO 105. In the transmitter 100, a first to a third VSM-AM modulator 101-103 modulate respectively : carriers of frequencies $f_4$ - $f_6$ by a first to a third CATV signal A-C to produce a first to a third VSM-AM signal. An adder 104 multiplexes the first to third VSM-AM signals to output a frequency multiplexed signal, i.e. FDM signal. The FDM signal is applied to the control voltage terminal of the VCO 105 whose oscillation frequency is $f_h$. As a result, the oscillation output of the VCO 105 is frequency modulated (FM) by the FDM signal. A semi-conductor laser 106 transforms the FM signal to an optical signal and sends the optical signal over the optical fiber 107. The optical fiber 107 is connected to the first to third receivers 117-119 via the splitter 110. The receivers 117-119 each has the same construction as the receiver 120 shown in Fig. 2, except for an FM detector 112 intervening between an O/E converter 111 and a variable frequency converter 113. The O/E converter 111 converts the incoming optical signal to a frequency modulated signal. The FM detector 112 demodulates the frequency modulated signal and thereby produces an FDM signal having center frequencies $f_4$ - $f_6$. The FDM signal is dealt with in the same manner as in the system shown in Fig. 2. Specifically, the variable frequency converter 113 converts any one of the center frequencies of the FDM signal to the pass band $f_{IF}$ of a band-pass filter 114. The frequency component passed the band-pass filter 114 is demodulated by an AM detector 115 and outputted as a desired CATV signal. Fig. 3 shows a specific condition wherein the variable frequency converters 113 built in the first to third receivers 117-119 have converted respectively the center frequencies $f_4$ - $f_6$ to the pass band $F_{IF}$ of the associated band-pass filters 114 to thereby select the first to third CATV signals A-C.

As stated above, this embodiment subjects the CATV signals A-C to amplitude modulation, then multiplexes them to produce an FDM signal, and then frequency modulates the:carrier by the FDM signal. Therefore, by taking advantage of the frequency modulation, it is not necessary to input an intense optical signal to each of the receivers 117-119, i.e., a single optical signal can be distributed to the receivers 117-119 by the splitter 110. Furthermore, since each receiver performs frequency conversion after FM detection, the variable frequency converter 113, band-pass filter 114 and AM modulator 115 can be implemented by a conventional CATV tuner 116 for a system using coaxial cables. This successfully reduces the cost of the receivers.

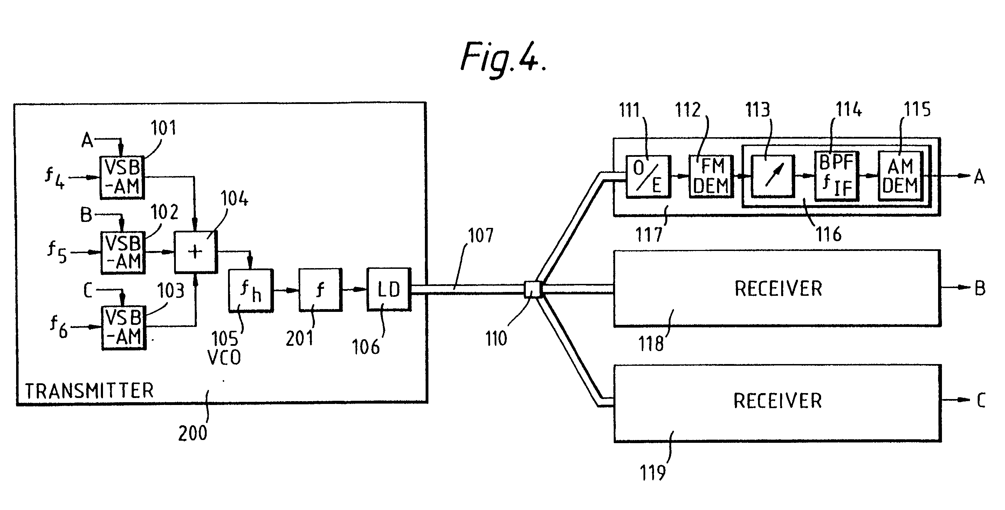

Fig. 4 shows an alternative embodiment of the present invention. In the figures, the same or similar components are designated by the same reference numerals, and redundant description will be avoided for simplicity. As shown, this embodiment is essentially similar to the embodiment of Fig. 3 except that a transmitter 200 has a pulsing unit 201 intervening between the VCO 105 and the semiconductor laser 106. The pulsing unit 201 transforms the FM modulated sinusoidal wave from the VCO 105 to a bilevel pulse signal, i.e., a pulsed FM signal. The bilevel pulsed signal drives the semiconductor laser 106. It is not necessary, therefore, for the laser 106 to show a highly linear optical output characteristic to an input signal. Hence, this embodiment is even more inexpensive than the previous embodiment.

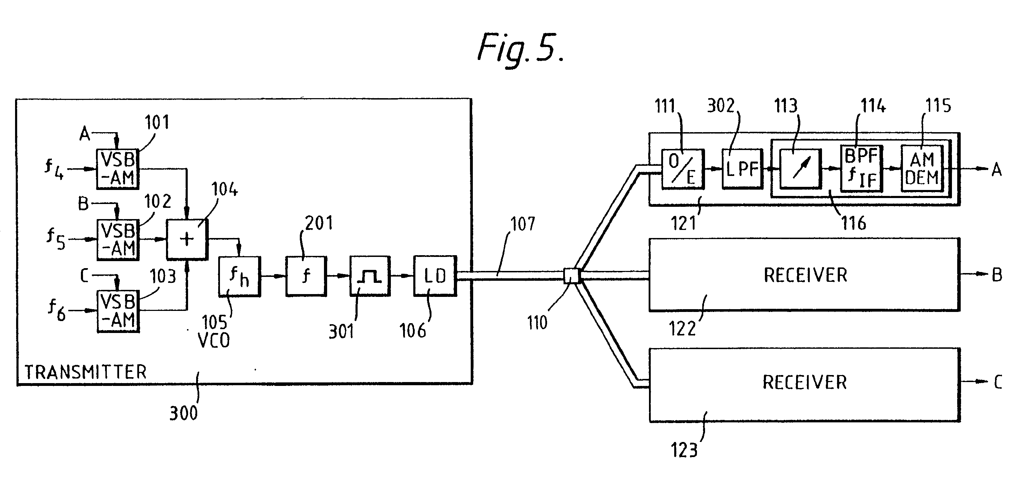

Another alternative embodiment of the present invention is shown in Fig. 5. Again, in the figures, the same or similar components are designated by the same reference numerals, and redundant description will be avoided for simplicity. This embodiment is different from the embodiment shown in Fig. 4 in that a transmitter 300 has a pulse width regulating circuit 301 between the pulsing unit 201 and the semiconductor laser 106, and in that receivers 121-123 each has a low-pass filter 302 in place of the FM detector 112, Fig. 4. The pulse width regulating circuit 301 regulates the pulse widths of the pulsed FM signal from the pulsing unit 201 to a predetermined width. Specifically, in the embodiment shown in Fig. 4, the pulse width of the pulsed FM signal outputted by the pulsing unit 201 changes as the frequency changes. When the pulse width of the pulsed FM signal is maintained constant, the signal turns out to be a pulse frequency modulated (PFM) signal and, therefore, can be demodulated by the low-pass filter 302. Regarding the pulse width, the pulse width regulating circuit 301 has only to be configured such that distortion does not occur when the FM signal reaches the maximum frequency, i.e., when the pulse interval is shortest. The low-pass filter 302 incorporated in each of the receivers 121-123 has the same function as the FM detector 112 shown in Fig. 4. Hence, the operation of the receivers 121-123 will not be described specifically to avoid redundancy.

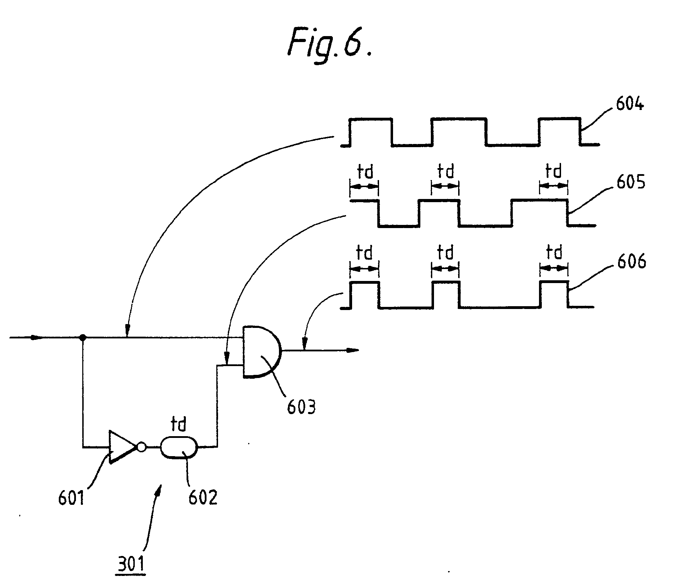

Fig. 6 shows a specific construction of the pulse width regulating circuit 301. As shown, the circuit 301 has an inverter 601 to which the pulsed FM signal is applied, a delay element 602 connected in series to the inverter 601, and an AND gate 603 receiving the pulsed FM signal at one input terminal and the output of the delay element 602 at the other input terminal. The pulsed FM signal (604) from pulsing unit 201, Fig. 5, is fed to one input terminal of the AND gate 603 and to the inverter 601. The inverter 601 inverts the pulsed FM signal to produce an inverted pulsed FM signal. The inverted pulsed FM signal is delayed by a predetermined period of time (td) by the delay element 602 and then fed to the other input terminal of the AND gate 603. The AND gate 603 ANDs the pulsed FM signal (604) and the delayed pulsed FM signal (605) and outputs the resulted AND as a PFM signal (606). Since the pulse width of the PFM signal is identical with the delay td caused by the delay element 602, the pulse width can be adjusted if the delay time td is changed. Such a pulse width regulating circuit 301 allows the low-pass filter 302 of each receiver to implement FM detection, further cutting down the cost of the receiver.

In summary, it will be seen that the present invention provides a CATV signal distribution system capable of distributing an optical signal to a plurality of subscribers at the same time and allowing each subscriber to use an existing CATV system which is implemented with coaxial cables.

## Claims

1. A CATV signal distribution system comprising transmitter means for multiplexing a plurality of TV signals to output a multiplexed TV signal in the form of an optical signal, a plurality of receiver means each being owned by a particular subscriber and selecting any one of said plurality of TV signals to output a selected TV signal, and optical transmission path means interconnecting said transmitter and said plurality of receiver means;

said transmitter means comprising:
amplitude modulating means for amplitude modulating subcarriers each having a particular frequency and assigned one-to-one to the plurality of TV signals by respective one of said plurality of TV signals to thereby produce a plurality of amplitude modulated (AM) signals;
multiplexing means for multiplexing said plurality of AM signals to output a frequency multiplexed (FDM) signal;

frequency modulating means for frequency modulating a main carrier having a predetermined frequency by said FDM signal to produce a frequency modulated (FM) signal; and
optical-to-electrical signal converting means for converting said FM signal to a corresponding optical signal and outputting said optical signal;

said plurality of receivers each comprising:
optical-to-electrical signal converting means for receiving said optical signal and converting said optical signal to said FM signal;
FM demodulating means for demodulating said FM signal to output said FDM signal;
selecting means for receiving said FDM signal, selecting any one of said plurality of AM signals constituting said FDM signal, and outputting said selected one of said AM signals as a selected AM signal; and
AM demodulating means for demodulating said selected AM signal to output said selected AM signal as said selected TV signal.

2. A system as claimed in claim 1, wherein said selecting means comprises:
frequency converting means for receiving said FDM signal and converting, among said plurality of AM signals constituting said AM signals, the frequency of one of the subcarriers which corresponds to said selected TV signal to a predetermined selected frequency and outputting said converted frequency as a converted FDM signal; and
band-pass filter means responsive to said converted FDM signal for outputting said selected AM signal and having said selected frequency as a center frequency of a pass band.

3. A system as claimed in claim 1, wherein said transmitter means further comprises pulsing means interposed between said frequency converting means and said electrical-to-optical signal converting means for converting said FM signal to a bilevel pulse signal, said electrical-to-optical signal converting means converting said bilevel pulse signal to an optical signal and outputting said optical signal as said multiplexed TV signal.

4. A system as claimed in claim 3, wherein said transmitter means further comprises pulse width regulating circuit means interposed between said pulsing means and said optical-to-electrical converting means for regulating the pulse width of said pulse signal to a predetermined pulse width and outputting said pulse signal with said predetermined pulse width as a pulse frequency modulated (PFM) signal, said optical-to-electrical converting means converting said PFM signal to an optical signal and outputting said optical signal as said multiplexed TV signal.

5. A system as claimed in claim 4, wherein said pulse width regulating circuit means comprises:

inverter means for inverting said pulse signal to output an inverted pulse signal;

delay means for delaying said inverted pulse signal by a predetermined period of time to output a delayed pulse signal; and

AND circuit means receiving said pulse signal at one input terminal and said delayed pulse signal at the other input terminal for producing an AND of said pulse signal and said delayed pulse signal to thereby output said PFM signal.

*Fig.1.*

PRIOR ART

EP 0 461 937 A2

# *Fig.2.*
PRIOR ART

EP 0 461 937 A2

# Fig. 3.

Fig.4.

Fig.5.

EP 0 461 937 A2

*Fig.6.*